# EUROPEAN PATENT APPLICATION

(11) **EP 4 231 523 A1**
(43) Date of publication of application: **23.08.2023**
(21) Application number: 21882508.1
(22) Date of filing: 24.09.2021
(51) Int. Cl.: H02S 30/10

(54) **ENERGY HARVESTING MODULE AND METHOD FOR MANUFACTURING SAME**

(30) Priority: 19.10.2020 JP 2020175575
(71) Applicant: Zeon Corporation, Tokyo 100-8246 (JP)
(72) Inventor: NAKADAIRA Tadakatsu, Tokyo 100-8246 (JP)
(74) Representative: Maiwald GmbH
(86) International application number: PCT/JP2021/035178
(87) International publication number: WO 2022/085367

(57) **Abstract**

This energy harvesting module (1) has: a plate-like energy harvesting element (2); and a frame comprising a first partial frame (5) formed so as to support the outer peripheral edge of a first principal surface of the energy harvesting element (2) and a second partial frame (6) formed so as to support the outer peripheral edge of a second principal surface positioned on the back side of the first principal surface of the energy harvesting element (2). The frame has an overlapping structure (9), a housing structure (11), and a fitting structure (12) for a first side of the energy harvesting element (2), said overlapping structure (9) being formed so that an outer peripheral wall (7) of one of the first partial frame (5) and the second partial frame (6) overlaps with an inner peripheral wall (8) of the other of the first partial frame (5) and the second partial frame (6) from the outside in the radial direction, said housing structure (11) being formed so that an end of the inner peripheral wall (8) is housed in a housing recessed portion (8) of the one of the first partial frame (5) and the second partial frame (6), and said fitting structure (12) being formed so that the outer peripheral wall (7) and the inner peripheral wall (8) are fitted in each other.

## Description

### TECHNICAL FIELD

This disclosure relates to an energy harvesting module and a method of producing the same.

### BACKGROUND

A known energy harvesting module includes an energy harvesting element, such as a solar cell element, and a frame that is attached to an outer edge of the energy harvesting element and that is formed of a plurality of partial frames. For example, Patent Literature (PTL) 1 discloses an energy harvesting module in which a frame is formed of partial frames attached along four sides of a solar cell element having a rectangular flat plate shape.

### CITATION LIST

### Patent Literature

PTL 1: JP2012-195483A

### SUMMARY

### (Technical Problem)

However, an energy harvesting module such as disclosed in PTL 1 requires a fastening device such as a screw to couple adjacent partial frames to each other, and thus has complicated production process.

Accordingly, it could be helpful to provide an energy harvesting module capable of simplifying production process and a method of producing the same.

### (Solution to Problem)

An energy harvesting module according to an aspect of the disclosure comprises: an energy harvesting element that is plate shaped; and a frame that includes a first partial frame configured to support an outer edge of a first principal surface of the energy harvesting element and a second partial frame configured to support an outer edge of a second principal surface located at a rear side of the first principal surface in the energy harvesting element, wherein the frame includes, at a first side of the energy harvesting element, an overlapping structure, a housing structure, and a fitting structure, the overlapping structure being configured to have an outer perimeter wall of one of the first partial frame and the second partial frame overlap with an inner perimeter wall of another one of the first partial frame and the second partial frame from radially outside, the housing structure being configured to have an end of the inner perimeter wall housed in a housing recess of the one of the first partial frame and the second partial frame, the fitting structure being configured to have the outer perimeter wall and the inner perimeter wall fitted in with each other. This configuration enables to overlap the outer perimeter wall with the inner perimeter wall from radially outside, to house an end of the inner perimeter wall in the housing recess, and to fit in the outer perimeter wall and the inner perimeter wall with each other, to thereby attach the first partial frame and the second partial frame to the outer edge of the energy harvesting element. Therefore, production process of the energy harvesting module is simplified. Further, at the first side, the housing structure prevents the one of the first partial frame and the second partial frame having the outer perimeter wall from being elastically deformed toward radially outside relative to the other one of the first partial frame and the second partial frame having the inner perimeter wall, to thereby ensure favorable fitting strength between the first partial frame and the second partial frame at the first side.

According to an embodiment of the disclosure, the frame includes, at a corner of the energy harvesting element, the overlapping structure and the housing structure. This configuration enables the overlapping structure and the housing structure to prevent, at the corner of the energy harvesting element, the first partial frame and the second partial frame from being elastically deformed radially toward both sides relative to each other, to thereby favorably retain the fitting state between the first partial frame and the second partial frame even when the corner is subject to shock. Therefore, more favorable fitting strength can be ensured between the first partial frame and the second partial frame, at the first side.

According to an embodiment of the disclosure, the frame includes, also at a second side that forms the corner with the first side, the overlapping structure, the housing structure, and the fitting structure. This configuration enables to more favorably retain, even when the corner is subject to shock, the fitting state between the first partial frame and the second partial frame, at the first side and the second side. Therefore, more favorable fitting strength can be ensured between the first partial frame and the second partial frame at the first side and the second side.

According to an embodiment of the disclosure, the energy harvesting element has a rectangular plate shape; and the frame includes, at each side of the energy harvesting element, the overlapping structure, the housing structure, and the fitting structure, and includes, also at each corner of the energy harvesting module, the overlapping structure and the housing structure. This configuration enables to firmly support the energy harvesting element through the frame.

According to an embodiment of the disclosure, the frame includes, at least at the first side, a supporting structure configured to have the first partial frame support an outer edge of the first principal surface while having the second frame support an outer edge of the second principal surface. This configuration enables to firmly support the energy harvesting element through the frame at least at the first side.

According to an embodiment of the disclosure, the supporting structure is a sandwiching structure in which the first partial frame and the second partial frame are configured to act in conjunction to sandwich the energy harvesting element therebetween. This configuration enables to more firmly support the energy harvesting element through the frame at least at the first side.

According to an embodiment of the disclosure, the frame includes, at least at the first side, an alternating arrangement structure in which the housing structure and the fitting structure are alternately arranged along the outer edge of the energy harvesting element. This configuration enables to dispose, in the alternating arrangement structure, the housing recess not adjacent to a portion corresponding to the fitting structure in the outer perimeter wall, to thereby favorably ensure bending rigidity of the outer perimeter wall in the fitting structure, which ensures more favorable fitting strength between the first partial frame and the second partial frame at least at the first side.

A method of producing an energy harvesting module according to an aspect of the disclosure, is a method of producing an energy harvesting module that includes: an energy harvesting element that is plate shaped; and a frame that includes a first partial frame configured to support an outer edge of a first principal surface of the energy harvesting element and a second partial frame configured to support an outer edge of a second principal surface located at a rear side of the first principal surface in the energy harvesting element, wherein the frame includes, at a first side of the energy harvesting element, an overlapping structure, a housing structure, and a fitting structure, the overlapping structure being configured to have an outer perimeter wall of one of the first partial frame and the second partial frame overlap with an inner perimeter wall of another one of the first partial frame and the second partial frame from radially outside, the housing structure being configured to have an end of the inner perimeter wall housed in a housing recess of the one of the first partial frame and the second partial frame, the fitting structure being configured to have the outer perimeter wall and the inner perimeter wall fitted in with each other, the method comprising: a frame attachment step of attaching the first partial frame and the second partial frame to the outer edge of the energy harvesting element by overlapping the outer perimeter wall with the inner perimeter wall from radially outside, housing the end of the inner perimeter wall in the housing recess, and fitting in the outer perimeter wall and the inner perimeter wall with each other. This configuration simplifies production process of the energy harvesting module through the frame attachment step in which fitting is adopted. Further, the housing structure enables to ensure favorable fitting strength between the first partial frame and the second partial frame at the first side.

### (Advantageous Effect)

An energy harvesting module capable of simplifying production process and a method of producing the same are provided.

### BRIEF DESCRIPTION OF THE DRAWINGS

In the accompanying drawings:
FIG. 1 is a perspective view illustrating an energy harvesting module according to an embodiment of the disclosure in a pre-assembly state;
FIG. 2 is a perspective view illustrating the energy harvesting module of FIG. 1 in a post-assembly state;
FIG. 3 is a top view illustrating an overlapping structure, a housing structure, and a fitting structure of the energy harvesting module of FIG. 1 in a pre-assembly state;
FIG. 4 is a top view illustrating the overlapping structure, the housing structure, and the fitting structure of the energy harvesting module of FIG. 1 in an assembled state;
FIG. 5 is a cross-sectional view at A-A of FIG. 4; and
FIG. 6 is a cross-sectional view at B-B of FIG. 4.

### DETAILED DESCRIPTION

An energy harvesting module 1 and a method of producing the same according to an embodiment of the disclosure will be described in detail below with reference to the drawings.

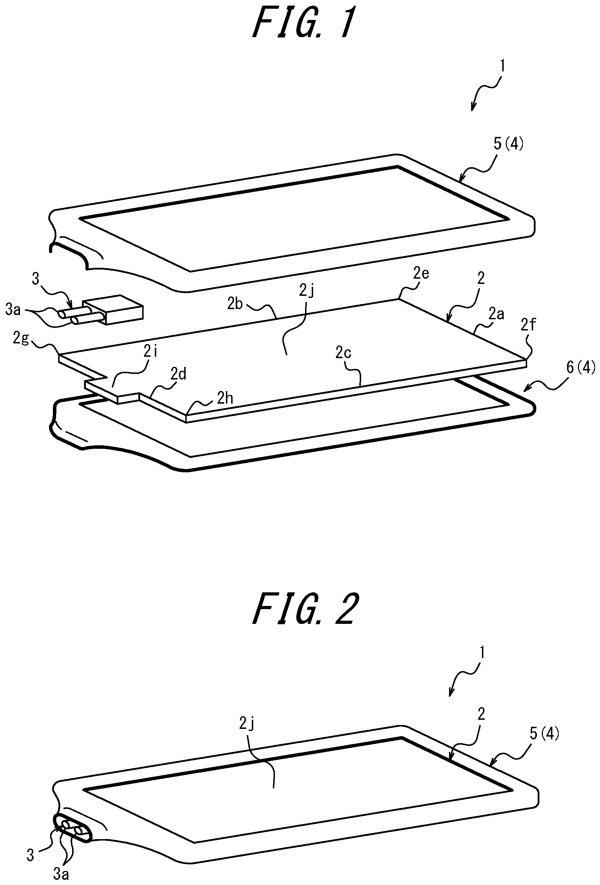

The energy harvesting module 1 of the present embodiment illustrated in FIGS. 1 and 2 includes an energy harvesting element 2, a terminal member 3, and a frame 4. The frame 4 includes a first partial frame 5 and a second partial frame 6. The energy harvesting element 2 is a solar cell element that is configured to convert light energy such as sunlight or indoor light into electrical energy. The energy harvesting element 2 is not limited to a solar cell element, and may be, for example, a thermoelectric conversion element that is configured to convert thermal energy such as geothermal heat to electrical energy.

The energy harvesting element 2 has a rectangular flat plate shape and includes a first side 2a, a second side 2b, a third side 2c, and a fourth side 2d at an outer edge of the energy harvesting element 2. The first side 2a and the second side 2b form a first corner 2e, the first side 2a and the third side2c form a second corner 2f, the second side 2b and the fourth side 2d form a third corner 2g, and the third side 2c and the fourth side 2d form a fourth corner 2h. The second side 2b and the third side 2c are both located adjacently to the first side 2a, and the fourth side 2d is located opposite the first side 2a. The fourth side 2d is provided with a terminal protrusion 2i that protrudes radially outside. The first side 2a, the second side 2b, and the third side 2c each have a linear shape.

The energy harvesting element 2 includes a first principal surface 2j and a second principal surface 2k located at a rear side of the first principal surface 2j. In the present embodiment, for convenience of explanation, a direction perpendicular to the energy harvesting element 2, that is, the thickness direction of the energy harvesting element 2, is referred to as vertical direction, a direction from a side corresponding to the second principal surface 2k toward a side corresponding to the first principal surface 2j is referred to as upward, a direction from a side corresponding to the first principal surface 2j toward a side corresponding to the second principal surface 2k is referred to as downward, a direction from inside to outside of the energy harvesting element 2 in a plane perpendicular to the vertical direction is referred to as radially outside, a direction from outside to inside of the energy harvesting element 2 in a plane perpendicular to the vertical direction is referred to as radially inside, and a direction around the energy harvesting element 2 in a plane perpendicular to the vertical direction is referred to as perimeter direction.

The terminal member 3 includes a terminal 3a for externally withdrawing electrical power generated by the energy harvesting element 2. The terminal member 3 is arranged on the terminal protrusion 2i, and is configured to be held by the frame 4 with the frame 4 being attached to the outer edge of the energy harvesting element 2.

The outer edge of the energy harvesting element 2 is covered by the frame 4 along the entire perimeter thereof, and is thereby protected. The frame 4 includes a first partial frame 5 configured to support the outer edge of the first principal surface 2j of the energy harvesting element 2, and a second partial frame 6 configured to support the outer edge of the second principal surface 2k of the energy harvesting element 2.

The first partial frame 5 and the second partial frame 6 are each made of a synthetic resin such as polycarbonate resin. However, the first partial frame 5 and the second partial frame 6 are not limited to those made of a synthetic resin. The first partial frame 5 and the second partial frame 6 are each integrally formed by injection molding. The first partial frame 5 and the second partial frame 6 may each be formed by assembling a plurality of members by using a fastening device such as a screw or through adhesion, fitting, or the like. The thickness of the frame 4 in the vertical direction when in an assembled state may be, for example, approximately 3 mm.

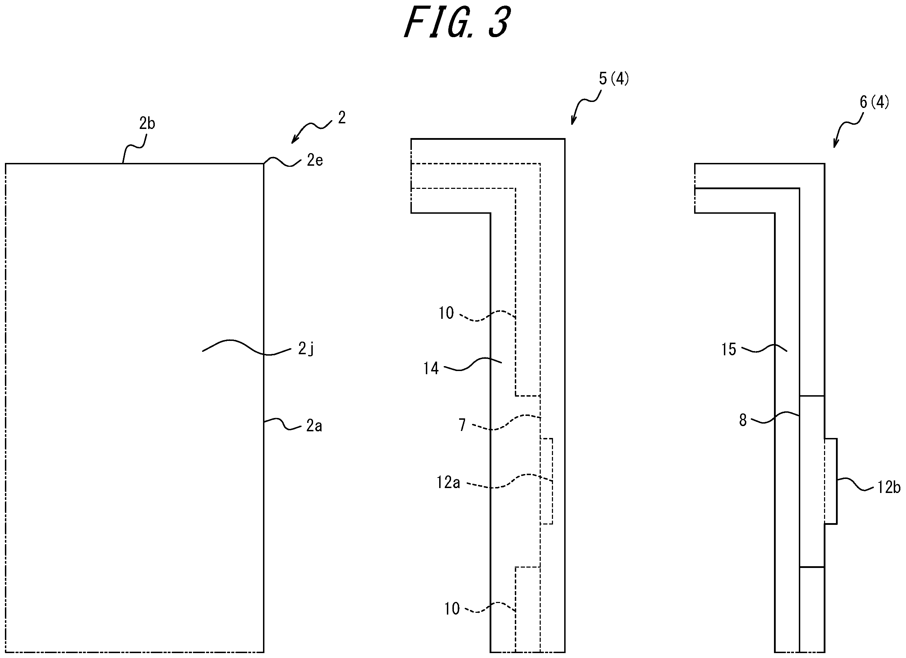

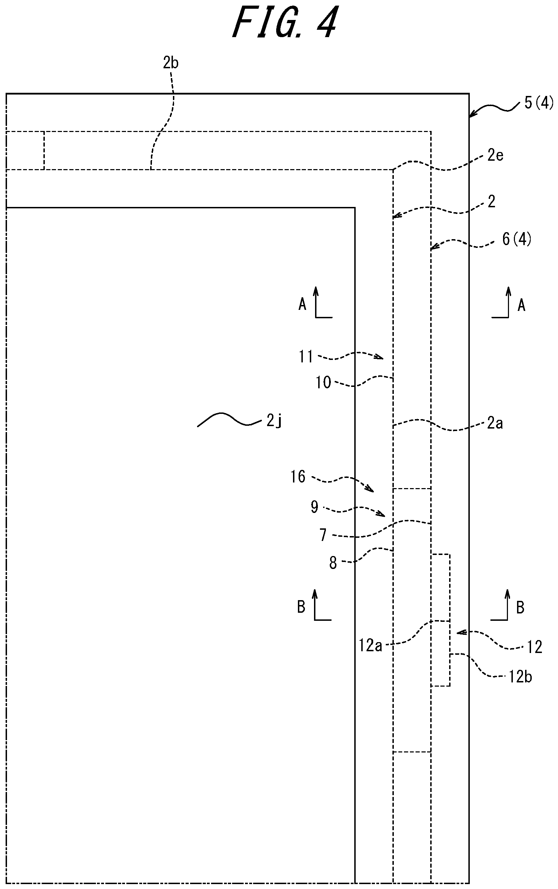

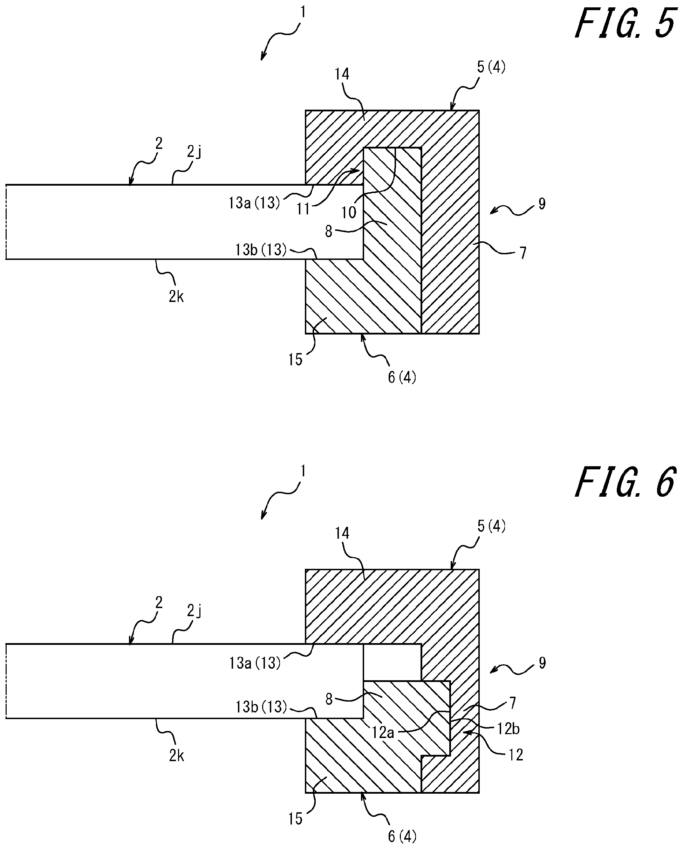

As illustrated in FIGS. 3 to 6, the frame 4 has an overlapping structure 9 in which the outer perimeter wall 7 of the first partial frame 5 is configured to overlap with the inner perimeter wall 8 of the second partial frame 6 from radially outside, a housing structure 11 in which an end of the inner perimeter wall 8 is configured to be housed in a housing recess 10 of the first partial frame 5, and a fitting structure 12 in which the outer perimeter wall 7 and the inner perimeter wall 8 are snap-fit with each other in the vertical direction, that is, the step-shaped portions of the partial frames are configured to be elastically deformed to move over each other in the vertical direction to thereby fit together, at the first side 2a of the energy harvesting element 2.

The outer perimeter wall 7 and the inner perimeter wall 8 each extend along the vertical direction and extend along the perimeter direction. The housing recess 10 is a recessed groove extending along the perimeter direction.

The frame 4 includes, at the first side 2a, a supporting structure 13 configured to have the first partial frame 5 support the outer edge of the first principal surface 2j and the second partial frame 6 support the outer edge of the second principal surface 2k. The supporting structure 13 is preferably a sandwiching structure in which the first partial frame 5 and the second partial frame 6 are configured to act in conjunction to sandwich the energy harvesting element 2 therebetween.

The supporting structure 13 includes a first support surface 13a provided on the first partial frame 5 so as to face the first principal surface 2j, and a second support surface 13b provided on the second partial frame 6 so as to face the second principal surface 2k.

The first partial frame 5 includes a first principal wall 14 extending radially inside from the base end of the outer perimeter wall 7 and extending along the perimeter direction. On the lower surface of the first principal wall 14, the housing recess 10 is provided adjacent to the outer perimeter wall 7. Further, a part of the lower surface of the first principal wall 14, the part being radially inside than the housing recess 10, constitutes the first support surface 13a.

The second partial frame 6 includes a second principal wall 15 extending radially inside from the base end of the inner perimeter wall 8 and extending along the perimeter direction. The upper surface of the second principal wall 15 constitutes the second support surface 13b.

In the fitting structure 12, the outer perimeter wall 7 includes a recess 12a as a step-shaped portion, and the inner perimeter wall 8 includes a protrusion 12b as a step-shaped portion. However, the recess 12a and the protrusion 12b may be replaced with each other. That is, the outer perimeter wall 7 may include the protrusion 12b as a step-shaped portion, and the inner perimeter wall 8 may have the recess 12a as a step-shaped portion.

In the present embodiment, the fitting structure 12 is provided across a portion above the second support surface 13b and a portion below the second support surface 13b, thereby efficiently allocating enough size for the step-shaped portion of the fitting structure 12 and increasing the fitting strength.

In order to facilitate snap-fitting in the fitting structure 12, a corner between an upper surface and a leading surface (outer surface) of the convex portion 12b may be chamfered, or a corner between the lower surface and the inner surface of the outer perimeter wall 7 may be chamfered.

The frame 4 includes, at the first side 2a, an alternating arrangement structure 16 in which the housing structure 11 and the fitting structure 12 are alternately arranged along the outer edge of the energy harvesting element 2. That is, in the alternating arrangement structure 16, the housing recess 10 is provided in a portion corresponding to the housing structure 11, but not in a portion corresponding to the fitting structure 12. Further, in the alternating arrangement structure 16, the length of the inner perimeter wall 8 in the vertical direction of a portion corresponding to the fitting structure 12 is shorter than the length of a portion corresponding to the housing structure 11 in the vertical direction.

In the present embodiment, in a portion corresponding to the fitting structure 12 in the alternating arrangement structure 16, the leading surface (upper end surface) of the inner perimeter wall 8 and the lower surface of the first principal wall 14 are not in contact with each other. However, in a portion corresponding to the fitting structure 12 in the alternating arrangement structure 16, the leading surface of the inner perimeter wall 8 and the lower surface of the first principal wall 14 may be in contact with each other. In a portion corresponding to the housing structure 11 in the alternating arrangement structure 16, the leading surface of the inner perimeter wall 8 and the bottom surface of the housing recess 10 may or may not be in contact with each other.

In the overlapping structure 9, the inner surface of the outer perimeter wall 7 and the outer surface of the inner perimeter wall 8 may preferably be in contact with each other in order to enhance fitting strength. Further, in the housing structure 11, the inner surface at the tip end of the inner perimeter wall 8 and the outer surface of the housing recess 10 may preferably be in contact with each other in order to enhance fitting strength.

In the overlapping structure 9, the leading surface (lower end surface) of the outer perimeter wall 7 and the base end surface (lower end surface) of the inner perimeter wall 8 are flush with each other. However, in the overlapping structure 9, the leading surface of the outer perimeter wall 7 and the base end surface of the inner perimeter wall 8 may not be flush with each other. In the overlapping structure 9, the inner surface of the inner perimeter wall 8 and the outer surface of the energy harvesting element 2 may or may not be in contact with each other.

The frame 4 includes the overlapping structure 9, the housing structure 11, and the fitting structure 12, not only at the first side 2a but also at each of the second side 2b, the third side 2c, and the fourth side 2d. In addition, the frame 4 includes the alternating arrangement structure 16 not only at the first side 2a but also at each of the second side 2b, the third side 2c, and the fourth side 2d.

As illustrated in FIGS. 3 to 4, the frame 4 includes, at the first corner 2e, the overlapping structure 9 and the housing structure 11. The frame 4 includes the overlapping structure 9 and the housing structure 11, also at each of the second corner 2f, the third corner 2g, and the fourth corner 2h.

The frame 4 includes the supporting structure 13 not only at the first side 2a, but also at each of the second side 2b, the third side 2c, and the fourth side 2d. The frame 4 includes the supporting structure 13 also at each of the first corner 2e, the second corner 2f, the third corner 2g, and the fourth corner 2h.

The energy harvesting module 1 of the present embodiment can readily be produced through a frame attaching step of attaching the first partial frame 5 and the second partial frame 6 to the outer edge of the energy harvesting element 2 by overlapping the outer perimeter wall 7 with the inner perimeter wall 8 from radially outside, housing the end of the inner perimeter wall 8 in the housing recess 10, and fitting in the outer perimeter wall 7 and the inner perimeter wall 8 with each other, at each of the first side 2a, the second side 2b, the third side 2c, and the fourth side 2d.

Further, at each of the first side 2a, the second side 2b, the third side 2c, and the fourth side 2d, the housing structure 11 prevents the first partial frame 5 having the outer perimeter wall 7 from relatively elastically deformed radially outside with respect to the second partial frame 6 having the inner perimeter wall 8, the second partial frame 6 having an inner perimeter wall 8, which enables to ensure, at each of the first side 2a, the second side 2b, the third side 2c, and the fourth side, a favorable fitting strength between the first partial frame 5 and the second partial frame 6.

Further, in the energy harvesting module 1 of the present embodiment, at each of the first corner 2e, the second corner 2f, the third corner 2g, and the fourth corner 2h, the overlapping structure 9 and the housing structure 11 prevent the first partial frame 5 and the second partial frame 6 from relatively elastically deformed radially toward both sides relative to each other, to thereby favorably retain a favorable fitting state between the first partial frame 5 and the second partial frame 6, even when the corners are subject to shock. Therefore, more favorable fitting strength can be ensured between the first partial frame 5 and the second partial frame 6.

The embodiment described above is merely an example of an embodiment of the disclosure, and various alterations can be made without departing from the gist of the disclosure.

Accordingly, the energy harvesting module 1 and the production method thereof according to the embodiment described above can be variously modified as described below, for example.

The energy harvesting module 1 can be variously modified as long as the energy harvesting module 1 has the energy harvesting element 2 that is plate shaped, and the frame 4 that includes the first partial frame 5 configured to support the outer edge of a first principal surface of the energy harvesting element 2 and a second partial frame 6 configured to support the outer edge of a second principal surface located at a rear side of the first principal surface of the energy harvesting element 2, in which the frame 4 includes, at the first side of the energy harvesting element 2, the overlapping structure 9, the housing structure 11, and the fitting structure 12, the overlapping structure 9 being configured to have the outer perimeter wall 7 of one of the first partial frame 5 and the second partial frame 6 overlap with the inner perimeter wall 8 of the other one of the first partial frame 5 and the second partial frame 6 from radially outside, the housing structure 11 being configured to have the end of the inner perimeter wall 8 housed in the housing recess 10 of the one of the first partial frame 5 and the second partial frame 6, the fitting structure 12 being configured to have the outer perimeter wall 7 and the inner perimeter wall 8 fitted in with each other.

However, in the energy harvesting module 1, the frame 4 may preferably have the overlapping structure 9 and the housing structure 11 for the corner (first corner 2e) of the energy harvesting element 2.

Further, in the energy harvesting module 1, the frame 4 may preferably have the overlapping structure 9, the housing structure 11, and the fitting structure 12, also at the second side 2b forming the corner with the first side 2a.

The energy harvesting module 1 may preferably have the energy harvesting element 2 that has a rectangular plate shape, and the frame 4 may preferably have the overlapping structure 9, the housing structure 11, and the fitting structure 12, at each side (the first side 2a, the second side 2b, the third side 2c, and the fourth side 2d) of the energy harvesting element 2, and preferably have the overlapping structure 9 and the housing structure 11 at each corner (the first corner 2e, the second corner 2f, the third corner 2g, and the fourth corner 2h) of the energy harvesting element 2.

Further, in the energy harvesting module 1, the frame 4 may preferably include the supporting structure 13 configured to have the first partial frame 5 support the outer edge of the first principal surface 2j and the second partial frame 6 support the outer edge of the second principal surface 2k, at least at the first side 2a.

Further, in the energy harvesting module 1, the supporting structure 13 may preferably be a sandwiching structure in which the first partial frame 5 and the second partial frame 6 are configured to act in conjunction to sandwich the energy harvesting element 2 therebetween.

Further, in the energy harvesting module 1, the frame 4 may preferably include, at least at the first side 2a, the alternating arrangement structure 16 in which the housing structure 11 and the fitting structure 12 are alternately arranged along the outer edge of the energy harvesting element 2.

The method for manufacturing the energy harvesting module 1 can be variously modified as long as the energy harvesting module 1 includes: the energy harvesting element 2 that is plate shaped; and the frame 4 that includes the first partial frame 5 configured to support an outer edge of the first principal surface 2j of the energy harvesting element 2, and the second partial frame 6 configured to support an outer edge of the first principal surface 2k located at a rear side of the first principal surface 2j in the energy harvesting element 2, in which the frame 4 includes, at the first side of the energy harvesting element 2, the overlapping structure 9, the housing structure 11, and the fitting structure 12, the overlapping structure 9 being configured to have an outer perimeter wall 7 of one of the first partial frame 5 and the second partial frame 6 overlap with an inner perimeter wall 8 of another one of the first partial frame 5 and the second partial frame 6 from radially outside, the housing structure 11 being configured to have an end of the inner perimeter wall 8 housed in the housing recess 10 of the one of the first partial frame 5 and the second partial frame 6, the fitting structure 12 being configured to have the outer perimeter wall 7 and the inner perimeter wall 8 fitted in with each other, the method including: a frame attachment step of attaching the first partial frame 5 and the second partial frame 6 to the outer edge of the energy harvesting element 2 by overlapping the outer perimeter wall 7 with the inner perimeter wall 8 from radially outside, housing the end of the inner perimeter wall 8 in the housing recess 10, and fitting in the outer perimeter wall 7 and the inner perimeter wall 8 with each other.

### INDUSTRIAL APPLICABILITY

It is possible to provide an energy harvesting module capable of simplifying production process and a method of producing the same.

### REFERENCE SIGNS LIST

- 1: energy harvesting module
- 2: energy harvesting element
- 2a: first side
- 2b: second side
- 2c: third side
- 2d: fourth side
- 2e: first corner
- 2f: second corner
- 2g: third corner
- 2h: fourth corner
- 2i: terminal protrusion
- 2j: first principal surface
- 2k: second principal surface
- 3: terminal member
- 3a: terminal
- 4: frame
- 5: first partial frame
- 6: second partial frame
- 7: outer wall
- 8: inner wall
- 9: overlapping structure
- 10: housing recess
- 11: housing structure
- 12: fitting structure
- 12a: recess
- 12b: protrusion
- 13: supporting structure
- 13a: first support surface
- 13b: second support surface
- 14: first principal wall
- 15: second principal wall
- 16: alternating arrangement structure.

## Claims

1. An energy harvesting module, comprising:
an energy harvesting element that is plate shaped; and
a frame that includes a first partial frame configured to support an outer edge of a first principal surface of the energy harvesting element and a second partial frame configured to support an outer edge of a second principal surface located at a rear side of the first principal surface in the energy harvesting element, wherein
the frame includes, at a first side of the energy harvesting element, an overlapping structure, a housing structure, and a fitting structure, the overlapping structure being configured to have an outer perimeter wall of one of the first partial frame and the second partial frame overlap with an inner perimeter wall of another one of the first partial frame and the second partial frame from radially outside, the housing structure being configured to have an end of the inner perimeter wall housed in a housing recess of the one of the first partial frame and the second partial frame, the fitting structure being configured to have the outer perimeter wall and the inner perimeter wall fitted in with each other.

2. The energy harvesting module according to claim 1, wherein the frame includes, at a corner of the energy harvesting element, the overlapping structure and the housing structure.

3. The energy harvesting module according to claim 2, wherein the frame includes, also at a second side that forms the corner with the first side, the overlapping structure, the housing structure, and the fitting structure.

4. The energy harvesting module according to any one of claims 1 to 3, wherein:
the energy harvesting element has a rectangular plate shape; and
the frame includes, at each side of the energy harvesting element, the overlapping structure, the housing structure, and the fitting structure, and includes, also at each corner of the energy harvesting module, the overlapping structure and the housing structure.

5. The energy harvesting module according to any one of claims 1 to 4, wherein the frame includes, at least at the first side, a supporting structure configured to have the first partial frame support an outer edge of the first principal surface while having the second frame support an outer edge of the second principal surface.

6. The energy harvesting module according to claim 5, wherein the supporting structure is a sandwiching structure in which the first partial frame and the second partial frame are configured to act in conjunction to sandwich the energy harvesting element therebetween.

7. The energy harvesting module according to any one of claims 1 to 6, wherein the frame includes, at least at the first side, an alternating arrangement structure in which the housing structure and the fitting structure are alternately arranged along the outer edge of the energy harvesting element.

8. A method of producing an energy harvesting module, in which the energy harvesting module includes:
an energy harvesting element that is plate shaped; and
a frame that includes a first partial frame configured to support an outer edge of a first principal surface of the energy harvesting element and a second partial frame configured to support an outer edge of a second principal surface located at a rear side of the first principal surface in the energy harvesting element, wherein
the frame includes, at a first side of the energy harvesting element, an overlapping structure, a housing structure, and a fitting structure, the overlapping structure being configured to have an outer perimeter wall of one of the first partial frame and the second partial frame overlap with an inner perimeter wall of another one of the first partial frame and the second partial frame from radially outside, the housing structure being configured to have an end of the inner perimeter wall housed in a housing recess of the one of the first partial frame and the second partial frame, the fitting structure being configured to have the outer perimeter wall and the inner perimeter wall fitted in with each other,
the method comprising:
a frame attachment step of attaching the first partial frame and the second partial frame to the outer edge of the energy harvesting element by overlapping the outer perimeter wall with the inner perimeter wall from radially outside, housing the end of the inner perimeter wall in the housing recess, and fitting in the outer perimeter wall and the inner perimeter wall with each other.
